(19) Europäisches Patentamt
European Patent Office
Office européen des brevets

(11) EP 0 633 700 B1

(12) EUROPEAN PATENT SPECIFICATION

(45) Date of publication and mention of the grant of the patent:
**03.05.2000 Bulletin 2000/18**

(51) Int. Cl.[7]: **H04N 7/32**, H04N 7/28, H04N 7/36

(21) Application number: **94110460.6**

(22) Date of filing: **05.07.1994**

# (54) Method and device for the search for a prediction block in predictive video compression

Verfahren und Vorrichtung zum Suchen nach einem Prädiktionsblock in prädiktive Bildkompression

Méthode et dispositif pour la recherche d'un bloc de prédiction dans une compression vidéo prédictive

(84) Designated Contracting States:
**DE ES FR GB IT NL SE**

(30) Priority: **05.07.1993 FI 933093**

(43) Date of publication of application:
**11.01.1995 Bulletin 1995/02**

(73) Proprietor: **OY NOKIA AB**
**02150 Espoo (FI)**

(72) Inventor: **Haikonen, Pentti**
**SF-02600 Espoo (FI)**

(74) Representative:
**Lehmann, Klaus, Dipl.-Ing. et al**
**Patentanwälte**
**Schroeter Fleuchaus Lehmann & Gallo,**
**Wolfratshauser Strasse 145**
**81479 München (DE)**

(56) References cited:
**EP-A- 0 331 094** **EP-A- 0 364 748**
**EP-A- 0 368 151** **EP-A- 0 457 362**

- **SPIE - IMAGE PROCESSING ALGORITHM AND TECHNIQUES, vol.1244, February 1990, BELLINGHAM US pages 355 - 366 M.GILGE 'Motion Estimation by scene adaptive block matching and illumination correction'**
- **TRANSACTIONS OF THE INSTITUTE OF ELECTRONICS, INFORMATION AND COMMUNICATION ENGINEERS OF JAPAN, vol.73, no.9, September 1990, TOKYO JP pages 1493 - 1502 H.M.JUNG ET AL. 'Adaptive vector quantisation based upon the update of a codebook for image sequence coding'**
- **IEEE INTERNATIONAL SYMPOSIUM ON CIRCUITS AND SYSTEM, vol.2/4, 1 May 1990, IEEE, NEW YORK US; pages 1003 - 1006 H.SUN ET AL. 'Motion compensated vector quantisation with a dynamic codebook'**
- **IEEE TRANSACTIONS ON MEDICAL IMAGING, vol.7, no.2, June 1988, NEW YORK US pages 118 - 126 H.SUN ET AL. 'Radiographic image sequence coding using two-stage adaptive vector quantisation'**
- **ELECTRONICS LETTERS, vol.28, no.18, August 1992, ENAGE GB pages 1770 - 1772 V.SEFERIDIS 'Three dimensional block matching motion estimation'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 633 700 B1

## Description

The invention relates to a method and a device for the search for a prediction block in connection with predictive video compression, wherein a desired search area is searched for a prediction block resembling as closely as possible to an image block to be encoded.

Video compression aims at reducing the number of bits required in the transmission and/or storing of a digitized image. Predictive video compression utilizes a prediction value derived e.g. from previously transmitted image material, and only the difference between the prediction value and an actual value is encoded.

Predictive video compression methods presently in use divide the image to be encoded into image blocks each comprising n x m, typically 8 x 8 pixels having the following positions:

$$
\begin{array}{llll}
P_{1,1} & P_{1,2} & P_{1,3} & \ldots\ldots P_{1,m} \\
P_{2,1} & P_{2,2} & P_{2,3} & \ldots\ldots P_{2,m} \\
. & & & \\
. & & & \\
. & & & \\
P_{n,1} & P_{n,2} & P_{n,3} & \ldots\ldots P_{n,m}
\end{array}
$$

Previously transmitted images (or fields) are searched for a prediction value for each image block to be transmitted, i.e. a block resembling the image block to be transmitted as closely as possible. In motion-compensation methods, it is assumed that an object in the image moves in a certain direction, whereby the prediction block can be found in the preceding transmitted image in the immediate vicinity of the location of the block to be encoded in the direction of movement.

The above-described prior art method is illustrated in Figure 1, where an image block to be encoded (transmitted) in a new image B1 is indicated with the reference B, and a prediction block candidate in an old image A1 is indicated with the reference A. In a so-called full-search motion compensation method the displacement in the old image A1 to the new prediction block candidate A takes place pixel by pixel within the search area, and e.g. a quantity ε is calculated for each pixel position:

$$\varepsilon = \sum_{i,j}^{n,m} |pa_{i,j} - pb_{i,j}|, \qquad (1)$$

where $pa_{i,j}$ is the intensity value of the pixel of block A, $pb_{i,j}$ is the intensity value of the pixel of block B, and the vertical lines stand for the absolute value of the difference between the intensity values. As used herein, the intensity value means either a grey intensity value or a colour intensity value (even though in practice the search for the prediction block in the motion compensation method, for instance, is performed entirely on the basis of the monochrome image, i.e. the grey intensity value).

Block A producing the smallest value of ε is accepted as the prediction block. The greatest allowable value of ε determines the magnitude of the matching error. In place of the sum of the absolute values of the differences between the intensity values, it is possible to calculate e.g. the sum of squared differences.

One variation of this basic approach is described in vector quantization term in IEEE International Symposium on Circuits and Systems, Vol. 2 of 4, 1 May 1990, IEEE, New York, US, pages 1003 to 1006, H. Sun et al: "Motion-compensated vector quantization with a dynamic codebook". In this case each image input block is considered as a vector. A dynamic codebook whose codewords consist of the vectors (image blocks) from an area of the previous frame is generated. This codebook establishes the search window. An input vector is compared to the codewords and if the difference between the input vector and the best-matched codeword is smaller than the preset threshold then the index or label of the codeword is transmitted. If no satisfactory codeword is found then the current image block position is encoded as by transform coding the difference between the blocks of consecutive frames. The codebook is considered dynamic as its contents are derived from a moving area from the previous frame. However, according to the method described by Sun et al. prediction blocks are not searched. Instead, found codewords (image blocks) are used as such for the decoded image.

The biggest disadvantage of the above-described prior art method is that the search for the prediction block requires plenty of calculation. For this reason, a number of versions have been developed where the direction of decreasing matching error is determined, and the search for the prediction block is performed in this direction. Although these methods require less calculation, they do not necessarily give the best possible end result, but in many cases merely a local minimum is found. This is due to the fact that images mostly do not behave in such a way that the best possible prediction block (the smallest possible matching error) could be found in the selected direction of search.

Full search thus always gives the best possible end result but requires a very high calculation capacity, whereas the best possible prediction block is not usually found by the above-mentioned searching methods.

This fact is recognized in SPIE - Image

Processing Algorithms and Techniques, Vol. 1244, February 1990, Bellingham, US, pages 355 to 366, M. Gilge: "Motion estimation by scene adaptive block matching (SABM) and illumination correction". Gilge proposes that an optimum selection of search positions can be obtained by codebook design algorithm. In fast search methods not all possible search positions are checked. Instead, a smaller number of empirically more probable positions are used. Gilge discloses methods for partitioning the search window into smaller fragments with uneven distribution of search positions. It is further proposed that the codebook containing these search positions could be adaptively updated if the coder would also test some new search positions outside the codebook. Apparently, the methods described by Gilge do not totally dispense with the burden of comparing large numbers of image blocks against each other.

The object of the present invention is to dispense with the above disadvantages and to provide a method and a device by means of which the best possible prediction block can be found with considerably less calculation than previously.

According to the invention, this object is achieved by a method for the search for a prediction block in connection with predictive video compression, wherein a desired search area is searched for a prediction block resembling as closely as possible to an image block to be encoded, whereby: image blocks acting as prediction block candidates within the search area are subjected to classification by deriving an identifier from each image block acting as a prediction block candidate, the identifier describing the image content of the concerned image block and each class being represented by its own identifier; the location of each image block acting as a prediction block candidate is stored in a memory at an address determined by said identifier, whereby the storing takes place such that at least one location data item remains in the memory for each identifier; the image block to be encoded is also subjected to said classification by deriving an identifier from said image block to be encoded, the identifier describing the image content of said image block to be encoded; and the location of the prediction block for the image block to be encoded is fetched from said memory from a memory position determined by the identifier describing the image content of the image block to be encoded.

Further, according to the invention, the above object is achieved by a device for the search for a prediction block in predictive video compression, wherein a desired search area is searched for a prediction block resembling as closely as possible to an image block to be encoded, comprising: memory means for storing the location of each image block acting as a prediction block candidate, and a processing unit for classifying each image block acting as prediction block candidate and the image block to be encoded, each class being represented by its own identifier, thereby deriving from each image block acting as prediction block candidate an identifier being a write address for writing into said memory means and from said image block to be encoded an identifier being a read address for reading from said memory means.

The invention is based on the idea that (a) each prediction block candidate within the search area is subjected to unequivocal classification based on the image content of the blocks, and the location of the image block belonging to each class is stored as representing the class, and (b) the image content of the image block to be encoded is subjected to a similar classification, whereby the obtained classification allows the location of the prediction block to be fetched immediately from the memory, which location is the stored location of the image block belonging to the class.

According to a preferred embodiment of the invention an identifier describing the class is derived by subsampling and truncation. In this case, no calculation is required in the search for the prediction block.

In the following the invention and its preferred embodiments will be described more fully by way of example referring to Figure 2 of the attached drawings, in which drawings

Figure 1 illustrates a prior art method for the search of a prediction block; and

Figure 2 illustrates a device realizing the method according to the invention.

Figure 2 illustrates the principle of a device realizing the method according to the invention. The device comprises a RAM memory 21, and a processing unit such as a filter 22 deriving an identifier according to the invention from the image content of an image block and having an output connected to an address input ADDR in the memory 21. The device further comprises a selector, such as a switch S, which selects the image block to be applied to the input of the processing unit (a prediction block candidate A or a block B to be encoded).

In the method according to the invention the displacement to the new prediction block candidate A takes place pixel by pixel, and the displacement operation is preferably performed over the entire image in the same way as in the prior art search methods (the image here also refers to the field in the case of an interlaced video signal). According to the invention the location of each block is stored in the memory 21 at an address derived from the image content of block A in a processing step performed by the processing unit 22. In the figure this address is indicated with the reference CA. The next location data item to be stored at the same address is written over the preceding location data item, so there is only one location data item at a time at the same address (i.e. in each class).

The output of the processing unit 22 thus

gives the write address at which the location of the concerned image block is stored. Typically the processing step is e.g. filtering or subsampling.

The location of the prediction block of block B to be encoded is then obtained immediately from the memory 21 by subjecting image block B to the same processing step (with the switch S in the position "B") and by feeding the image content of the block to be encoded, after the above-mentioned processing, as the read address of the memory 21. In the figure this read address is indicated with the reference CB.

According to the invention, image information is thus first classified on the basis of the image content in a processing step covering the entire search area (each class being represented by its own identifier CA). The prediction block of each image block to be encoded is then obtained as simply and rapidly as possible by fetching the address of the image block representing the class of the image block to be encoded from the memory.

Location data to be stored in the memory 21 may be encoded in vector form in the same way as in the prior art methods. Location data obtained from the memory may be absolute, but it may also be converted into relative form so as to make it more suitable for further compression.

The processing step, such as filtering, determines the maximum matching error. The processing may also be performed in several stages, whereby the search is repeated with a greater matching error if the processing stage with a smaller matching error (such as filtering) did not produce a desired result.

As mentioned above, the processing step performed to derive the identifier CA or CB describing the image content of the image block selected as a prediction block candidate and that of the image block to be encoded, respectively, may consist of several possible ways of processing. An essential feature of the processing and the processing unit performing it is that the identifier derived from the image content of the image block classifies the concerned image block unequivocally into a certain class within which the image blocks differ only slightly from each other and which thus represents a larger number of nearly similar blocks. In place of filtering the processing may consist e.g. of a combination of subsampling and truncation (subsampling means that some of the samples are disregarded, while truncation means that the number of bits used per one pixel is reduced).

In the method according to the invention considerably less calculation is required than previously as the pixel-by-pixel displacement to the new prediction block candidate A is performed only once on the entire search area, e.g. on an image, instead of repeating it with each block to be encoded as in the prior art methods. Moreover, if the processing step consists e.g. of subsampling and truncation, the method according to the invention requires no calculation.

In the method according to the invention the search for the prediction block can be conducted easily over the entire area of the image or field instead of searching e.g. only the immediate vicinity of the block to be encoded. Also, the search for the prediction block may equally well be performed over an arbitrary previous field or image. The search area may thus be very large, which ensures that the end result will be the best possible with the highest possible probability.

The prediction block may also be compiled from sub-blocks derived from different locations. The image block is thereby divided into smaller sub-blocks; for instance, an image block having 8 x 8 pixels is divided into four blocks having 4 x 4 pixels, and a prediction block is located for each sub-block as described above (the classification is performed on the basis of the sub-block size). The obtained four prediction blocks are then combined into a single prediction block for the entire image block.

It is also possible to perform affine transformation on the image block to be encoded to obtain a number of new image blocks TB, for which prediction blocks are located as described above (the classification is performed on the basis of the transformed image block). A prediction block for the image B to be encoded is derived from the selected prediction block by subjecting it to the inverse transformation of the above-mentioned transformation. Affine transformation is a transformation in which the shape of the image block changes, from a square to a rhombus, for instance.

Even though the invention has been described above with reference to the examples of the attached drawings, it is clear that the invention is not limited to them, but it may be varied within the inventive idea disclosed above and in the attached claims. The read and write addresses of the memory, for instance, need not be derived directly as a result of the processing performed by the processing unit, but they may be derived in an additional step on the basis of the identifier obtained from the processing unit and representing a particular class. It is also possible to store more than one location data item per address (class) in the memory, which, however, complicates the device unnecessarily.

## Claims

**1.** Method for the search for a prediction block in connection with predictive video compression, wherein a desired search area is searched for a prediction block resembling as closely as possible to an image block (B) to be encoded, whereby:

image blocks (A) acting as prediction block candidates within the search area are subjected to classification by deriving an identifier (CA) from each image block (A) acting as a prediction block candidate, the identifier

describing the image content of the concerned image block and each class being represented by its own identifier;

the location of each image block (A) acting as a prediction block candidate is stored in a memory (21) at an address determined by said identifier (CA), whereby the storing takes place such that at least one location data item remains in the memory for each identifier (CA);

the image block (B) to be encoded is also subjected to said classification by deriving an identifier (CB) from said image block (B) to be encoded, the identifier describing the image content of said image block (B) to be encoded; and

the location of the prediction block for the image block (B) to be encoded is fetched from said memory (21) from a memory position determined by the identifier (CB) describing the image content of the image block (B) to be encoded.

2. Method according to claim 1, **characterized** in that all image blocks within the search area are subjected to said classification by a pixel-by-pixel displacement to the new prediction block candidate (A).

3. Method according to claim 1 or 2, **characterized** in that only one location data item remains in the memory for each identifier (CA).

4. Method according to claim 1, **characterized** in that said identifier (CA) is derived by filtering from the image content of each image block (A) acting as a prediction block candidate.

5. Method according to claim 1, **characterized** in that said identifier (CA) is derived by subsampling and truncation from the image content of each image block (A) acting as a prediction block candidate.

6. Method according to claim 1, **characterized** in that the search area consists of the entire area of an image.

7. Method according to claim 1, **characterized** in that the search area consists of the area of more than one images.

8. Method according to claim 1, **characterized** in that the image block to be encoded is divided into subblocks, a prediction block is located for each subblock, and the located prediction blocks are then combined into a single prediction block for the entire image block.

9. Method according to claim 1, **characterized** in that the image block to be encoded is converted by affine transformation into a number of new image blocks, a prediction block is located for each new image block, and a prediction block is derived for the block to be encoded from a prediction block selected from among said prediction blocks for the new image blocks by performing the inverse transformation of said transformation on the selected prediction block.

10. Device for the search for a prediction block in predictive video compression, wherein a desired search area is searched for a prediction block resembling as closely as possible to an image block (B) to be encoded, comprising:

memory means (21) for storing the location of each image block (A) acting as a prediction block candidate, and

a processing unit (22) for classifying each image block (A) acting as prediction block candidate and the image block (B) to be encoded, each class being represented by its own identifier, thereby deriving from each image block (A) acting as prediction block candidate an identifier (CA) being a write address for writing into said memory means (21) and from said image block (B) to be encoded an identifier (CB) being a read address for reading from said memory means (21).

11. Device according to claim 10, **characterized** in that said means comprise a filter (22).

**Patentansprüche**

1. Verfahren für die Suche nach einem Vorhersageblock im Zusammenhang mit einer vorhersagenden Videokompression, wobei ein gewünschter Suchbereich nach einem Vorhersageblock durchsucht wird, der so gut wie möglich einem zu kodierenden Bildblock (B) ähnelt, wobei:

Bildblöcke (A), die als Vorhersageblock-Kandidaten innerhalb des Suchbereichs wirken, einer Klassifizierung unterzogen werden, indem ein Identifizierer (CA) aus jedem Bildblock (A) abgeleitet wird, der als ein Vorhersageblock-Kandidat wirkt, wobei der Identifizierer den Bildinhalt des betroffenen Bildblocks beschreibt und wobei jede Klasse von ihrem eigenen Identifizierer repräsentiert wird;

die Position jedes Bildblocks (A), der als ein

Vorhersageblock-Kandidat wirkt, in einem Speicher (21) an einer Adresse gespeichert wird, die von dem Identifizierer (CA) bestimmt wird, wobei das Speichern derart durchgeführt wird, daß mindestens ein Positionsdatenmerkmal in dem Speicher für jeden Identifizierer (CA) verbleibt;

der zu kodierende Bildblock (B) ebenfalls der Klassifizierung unterzogen wird, indem ein Identifizierer (CB) aus dem zu kodierenden Bildblock (B) abgeleitet wird, wobei der Identifizierer den Bildinhalt des zu kodierenden Bildblocks (B) beschreibt; und

die Position des Vorhersageblocks für den zu kodierenden Bildblock (B) aus dem Speicher (21) von einer Speicherposition geholt wird, die von dem Identifizierer (CB) bestimmt wird, der den Bildinhalt des zu kodierenden Bildblocks (B) beschreibt.

**2.** Verfahren nach Anspruch 1, dadurch gekennzeichnet, daß alle Bildblöcke innerhalb des Suchbereichs der Klassifizierung durch eine Pixel-bei-Pixel-Verschiebung auf den neuen Vorhersageblock-Kandidaten (A) unterzogen werden.

**3.** Verfahren nach Anspruch 1 oder 2, dadurch gekennzeichnet, daß nur ein Positionsdatenmerkmal in dem Speicher für jeden Identifizierer (CA) verbleibt.

**4.** Verfahren nach Anspruch 1, dadurch gekennzeichnet, daß der Identifizierer (CA) durch Filtern aus dem Bildinhalt jedes Bildblocks (A) abgeleitet wird, der als ein Vorhersageblock-Kandidat wirkt.

**5.** Verfahren nach Anspruch 1, dadurch gekennzeichnet, daß der Identifizierer (CA) durch Teilabtasten und Trunkieren aus dem Bildinhalt jedes Bildblocks (A) abgeleitet wird, der als ein Vorhersageblock-Kandidat wirkt.

**6.** Verfahren nach Anspruch 1, dadurch gekennzeichnet, daß der Suchbereich aus dem gesamten Bereich eines Bilds besteht.

**7.** Verfahren nach Anspruch 1, dadurch gekennzeichnet, daß der Suchbereich aus dem Bereich von mehr als einem Bild besteht.

**8.** Verfahren nach Anspruch 1, dadurch gekennzeichnet, daß der zu kodierende Bildblock in Unterblöcke unterteilt wird, daß ein Vorhersageblock für jeden Unterblock angeordnet wird, und daß die angeordneten Vorhersageblöcke dann zu einem einzigen Vorhersageblock für den gesamten Bildblock kombiniert werden.

**9.** Verfahren nach Anspruch 1, dadurch gekennzeichnet, daß der zu kodierende Bildblock durch affine Transformation in eine Anzahl neuer Bildblöcke konvertiert wird, daß ein Vorhersageblock für jeden neuen Bildblock angeordnet wird, und daß ein Vorhersageblock für den zu kodierenden Block aus einem Vorhersageblock abgeleitet wird, der aus den genannten Vorhersageblöcken für die neuen Bildblöcke ausgewählt wird, indem die inverse Transformation der Transformation an dem ausgewählten Vorhersageblock durchgeführt wird.

**10.** Vorrichtung für die Suche nach einem Vorhersageblock bei einer vorhersagenden Videokompression, wobei ein gewünschter Suchbereich nach einem Vorhersageblock durchsucht wird, der so gut wie möglich einem zu kodierenden Bildblock (B) ähnelt, aufweisend:

Speichereinrichtungen (21) zum Speichern der Position jedes Bildblocks (A), der als ein Vorhersageblock-Kandidat wirkt, und

eine Verarbeitungseinheit (22) zum Klassifizieren jedes Bildblocks (A), der als Vorhersageblock-Kandidat wirkt, und des zu kodierenden Bildblocks (B), wobei jede Klasse von ihrem eigenen Identifizierer repräsentiert wird, wodurch aus jedem Bildblock (A), der als Vorhersageblock-Kandidat wirkt, ein Identifizierer (CA), der eine Schreib-Adresse zum Schreiben in die Speichereinrichtungen (21) ist, und aus dem zu kodierenden Bildblock (B) ein Identifizierer (CB), der eine Lese-Adresse zum Lesen aus den Speichereinrichtungen (21) ist, abgeleitet wird.

**11.** Vorrichtung nach Anspruch 10, dadurch gekennzeichnet, daß die Einrichtungen einen Filter (22) aufweisen.

**Revendications**

**1.** Méthode pour la recherche d'un bloc de prédiction en relation avec une compression vidéo prédictive, dans laquelle une zone de recherche souhaitée est examinée afin de rechercher un bloc de prédiction ressemblant autant que possible à un bloc d'image (B) à coder, dans laquelle :

des blocs d'image (A) utilisés comme blocs de prédiction candidats à l'intérieur de la zone de recherche sont soumis à une classification en dérivant un identifiant (CA) issu de chaque bloc d'image (A) utilisé comme bloc de prédiction candidat, l'identifiant désignant le contenu

d'image du bloc d'image concerné et chaque classe étant représentée par son propre identifiant ;

l'emplacement de chaque bloc d'image (A) utilisé comme bloc de prédiction candidat est enregistré dans une mémoire (21) à une adresse déterminée par ledit identifiant (CA), l'enregistrement se déroulant de telle sorte qu'au moins un élément de donnée d'emplacement reste en mémoire pour chaque identifiant (CA) ;
le bloc d'image (B) devant être codé est également soumis à ladite classification en dérivant un identifiant (CB) dudit bloc d'image (B) à coder, l'identifiant décrivant le contenu d'image dudit bloc d'image (B) à coder ; et
l'emplacement du bloc de prédiction pour le bloc d'image (B) à coder est extrait de ladite mémoire (21) à partir d'une position de mémoire déterminée par l'identifiant (CB) décrivant le contenu d'image du bloc d'image (B) à coder.

**2.** Méthode selon la revendication 1, caractérisée en ce que tous les blocs d'image à l'intérieur de la zone de recherche son soumis à ladite classification suivant un déplacement pixel par pixel vers le nouveau bloc de prédiction candidat (A).

**3.** Méthode selon la revendication 1 ou 2, caractérisée en ce que seul un élément de donnée d'emplacement reste dans la mémoire pour chaque identifiant (CA).

**4.** Méthode selon la revendication 1, caractérisée en ce que ledit identifiant (CA) est obtenu par filtrage du contenu d'image de chaque bloc d'image (A) utilisé comme bloc de prédiction candidat.

**5.** Méthode selon la revendication 1, caractérisée en ce que ledit identifiant (CA) est obtenu par sous-échantillonnage et troncature du contenu d'image de chaque bloc d'image (A) utilisé comme bloc de prédiction candidat.

**6.** Méthode selon la revendication 1, caractérisée en ce que la zone de recherche représente la surface entière de l'image.

**7.** Méthode selon la revendication 1, caractérisée en ce que la zone de recherche représente la surface de plusieurs images.

**8.** Méthode selon la revendication 1, caractérisée en ce que le bloc d'image à coder est divisé en sous-blocs, un bloc de prédiction est localisé pour chaque sous-bloc, et les blocs de prédiction localisés sont ensuite combinés dans un seul bloc de prédiction pour le bloc d'image entier.

**9.** Méthode selon la revendication 1, caractérisée en ce que le bloc d'image est converti par transformation affine en un certain nombre de nouveaux blocs d'image, un bloc de prédiction est localisé pour chaque nouveau bloc d'image et un bloc de prédiction est dérivé pour le bloc à coder à partir d'un bloc de prédiction sélectionné parmi lesdits blocs de prédiction pour les nouveaux blocs d'image en effectuant la transformation inverse de ladite transformation sur le bloc de prédiction sélectionné.

**10.** Dispositif pour la recherche d'un bloc de prédiction en relation avec une compression vidéo prédictive, dans lequel une zone de recherche est examinée afin de rechercher un bloc de prédiction ressemblant autant que possible à un bloc d'image (B) à coder, comprenant :

un moyen de mémoire (21) pour stocker l'emplacement de chaque bloc d'image (A) utilisé comme bloc de prédiction candidat, et
une unité de traitement (22) pour classifier chaque bloc d'image (A) utilisé comme bloc de prédiction candidat et le bloc d'image (B) à coder, chaque classe étant représentée par son propre identifiant, dérivant ainsi de chaque bloc d'image (A) utilisé comme bloc de prédiction candidat un identifiant (CA) étant une adresse d'écriture pour écrire dans ledit moyen de mémoire (21), et dudit bloc d'image (B) à coder un identifiant (CB) étant une adresse de lecture pour lire ledit moyen de mémoire (21).

**11.** Dispositif selon la revendication 10, caractérisé en ce que lesdits moyens comprennent un filtre (22).

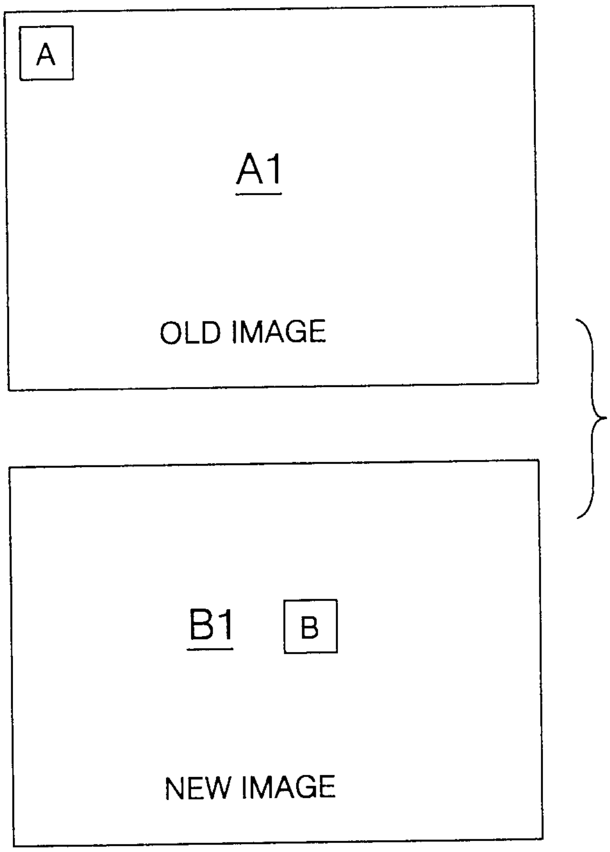
A
A1
OLD IMAGE
B1
B
NEW IMAGE

FIG. 1

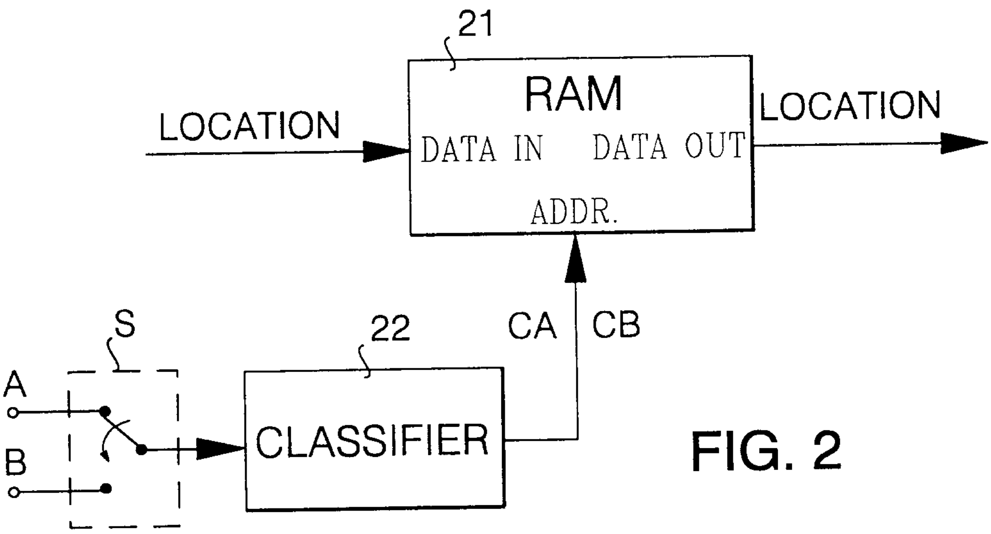
21
RAM
LOCATION
DATA IN
DATA OUT
LOCATION
ADDR.
S
22
CA
CB
A
B
CLASSIFIER

FIG. 2